# EUROPÄISCHE PATENTSCHRIFT

(11) **EP 0 705 791 B1**
(45) Veröffentlichungstag und Bekanntmachung des Hinweises auf die Patenterteilung: **29.07.1998**
(21) Anmeldenummer: 95101774.8
(22) Anmeldetag: 10.02.1995
(51) Int. Cl.: C01B 21/04

(54) **Verfahren und Vorrichtung zum Erzeugen von Stickstoff**
Process and apparatus for obtaining nitrogen
Procédé et dispositif pour l'obtention d'azote

(30) Priorität: 06.10.1994 DE 4435702
(43) Veröffentlichungstag der Anmeldung: 10.04.1996
(73) Patentinhaber: Druckluft Dannöhl GmbH, D-46236 Bottrop (DE)
(72) Erfinder: Dannöhl, Peter Fritz, D-46236 Bottrop (DE)
(74) Vertreter: Hosbach, Hans Ulrich, Dipl.-Ing.

(56) Entgegenhaltungen:
- EP-A- 0 473 093
- US-A- 5 233 837
- PATENT ABSTRACTS OF JAPAN vol. 012 no. 421 (C-541) ,8.November 1988 & JP-A-63 151602 (KAWASAKI STEEL CORP) 24.Juni 1988,

## Beschreibung

Die Erfindung betrifft ein Verfahren und eine Vorrichtung zum Erzeugen von Stickstoff, wobei Luft verdichtet, gekühlt, gereinigt, wieder erwärmt und schließlich durch mindestens eine Membran-Separatorstufe geleitet wird.

Eine derartige Stickstofferzeugung ist in der älteren, nicht vorveröffentlichten Deutschen Patentanmeldung P 4404 072.5 beschrieben. Dort wird mit einem durch Öleinspritzung gekühlten Luftverdichter gearbeitet, wobei das Öl durch einen Wärmetauscher geleitet wird, der seinerseits zum Wiedererwärmen der gereinigten Luft dient.

Es wurde gefunden, daß diese Art der Stickstofferzeugung wirkungsgradmäßig verbesserungsfähig ist, und zwar unter gleichzeitiger Einsparung an apparativem Aufwand.

Ferner ist es aus der Veröffentlichung PATENTS ABSTRACTS FROM JAPAN, Abstracts Vol. 012421, JP-A-63151602 (KAWASAKI STEEL) bekannt, das bei der Abtrennung von Luftsauerstoff anfallende Abfallgas einer Behandlung zur Erzeugung reinen Stickstoffs zu unterwerfen, wobei das Abfallgas gewaschen, getrocknet, verdichtet, gekühlt, erneut getrocknet, wiedererwärmt und schließlich dem Druckwechselverfahren unterworfen wird. Auch dieses (gattungsfremde) Verfahren ist wirkungsgradmäßig verbesserungsfähig.

Der Erfindung liegt daher die Aufgabe zugrunde, eine Möglichkeit zur wirtschaftlicheren und apparativ einfacheren Stickstofferzeugung zu schaffen.

Zur Lösung dieser Aufgabe ist das Verfahren nach der Erfindung dadurch gekennzeichnet, daß das Wiedererwärmen der gereinigten Luft im Wärmeaustausch mit der verdichteten, zu kühlenden Luft durchgeführt wird.

Die im Verdichter entstehende Wärme wird also direkt auf die in die Separatorstufe einzuleitende Luft übertragen, was sehr viel günstiger ist als der Umweg über das im Verdichter benötigte Kühlöl. Auch sinkt dabei der erforderliche apparative Aufwand.

Vor allen Dingen bietet die Erfindung die Möglichkeit, einen Luftverdichter einzusetzen, der ohne Einspritzung von Kühlöl arbeitet. Dadurch entfällt der gesamte Kühlölkreis.

In wesentlicher Weiterbildung der Erfindung wird vorgeschlagen, daß bei Reduzierung der Leistung mindestens ein Teil der gekühlten, gereinigten Luft zur Verdichtung rezirkuliert wird. Dies ist deshalb besonders günstig, weil der nicht benötigte Anteil der bereits gereinigten Luft nicht abgeblasen werden muß, sondern im Kreislauf geführt und bereitgehalten wird.

Vorzugsweise wird bei Einsatz von mindestens zwei Separatorstufen das Konzentrat aus mindestens einer der nachgeschalteten Separatorstufen, vorteilhafterweise das Konzentrat der letzten Separatorstufe zur Verdichtung rezirkuliert. Das Konzentrat der ersten Separatorstufe besteht aus stark mit Sauerstoff angereicherter Luft, während das Permeat dieser Stufe bereits mit Stickstoff angereichert ist. Dementsprechend besteht das Konzentrat der nachgeschalteten Separatorstufen ebenfalls aus mit Stickstoff angereicherter Luft. Wenn diese, wie vorgeschlagen, zur Verdichtung rezirkuliert wird, ergibt sich daraus eine beträchtliche Wirkungsgradsteigerung.

Die Erfindung schafft ferner eine Vorrichtung zum Erzeugen von Stickstoff mit einem Luftverdichter, mindestens einem dem Luftverdichter nachgeschalteten Luftkühler, einem dem Luftkühler nachgeschalteten Kondensatabscheider, einer dem Kondensatabscheider nachgeschalteten Heizeinrichtung und mindestens einem der Heizeinrichtung nachgeschalteten Membran-Separator, wobei diese Vorrichtung zur Lösung der gestellten Aufgabe dadurch gekennzeichnet ist, daß die Heizeinrichtung als Wärmetauscher ausgebildet und heißluftseitig zwischen den Luftverdichter und den Luftkühler geschaltet ist. Die gereinigte Luft wird also vor Eintritt in den Separator im Wärmeaustausch mit der aus dem Verdichter kommenden heißen Luft erwärmt, was energetisch günstig und apparativ einfach ist. Die heiße Luft gibt bereits einen Teil ihrer Wärme ab, so daß der nachgeschaltete Luftkühler entsprechend kleiner dimensioniert sein oder unter Umständen sogar völlig entfallen kann.

Die Leistung des Luftverdichters ist an die Leistung des Separators angepaßt. Für den Fall einer Leistungsreduzierung ist die Vorrichtung in Weiterbildung der Erfindung gekennzeichnet durch eine stromab des Kondensatabscheiders abzweigende, zur Ansaugseite des Luftverdichters führende ventilgesteuerte Luftrückführungsleitung, die zugeschaltet wird, wenn die Leistung der Vorrichtung reduziert werden soll. Sie enthält hierzu vorteilhafterweise ein vom Auslaßdruck des Luftverdichters abhängiges Ventil.

Vorzugsweise ist dem Separator eine verstellbare, von einer O₂-Sonde gesteuerte Drossel nachgeschaltet, die den Gegendruck des Separators und damit den Reinheitsgrad des Stickstoffs bestimmt und zu Eichzwecken mit der im Kondensatabscheider gereinigten Luft beaufschlagbar ist. Dabei ist es vorteilhaft, die O₂-Sonde eingangsseitig über ein Dreiwegeventil an eine Eichleitung anzuschließen, die stromauf des Magnetventils in der Luftrückführungsleitung mündet. Der Eichvorgang wird dann dadurch eingeleitet, daß man das Dreiwegeventil umschaltet, so daß die O₂-Sonde nicht mehr an die Stickstoffleitung hinter dem Separator, sondern vielmehr an die Eichleitung angeschlossen ist und mit gereinigter Luft beaufschlagt wird. Vorzugsweise ist die O₂-Sonde ausgangsseitig über eine Meßgasrückführungsleitung mit der Ansaugseite des Luftverdichters verbunden, so daß das Meßgas (ob Eichgas oder Stickstoff) rezirkuliert wird.

In wesentlicher Weiterbildung der Erfindung wird vorgeschlagen, daß mindestens zwei Separatoren vorgesehen sind und daß der Konzentratauslaß mindestens eines der nachgeschalteten Separatoren, vorzugsweise der Konzentratauslaß des letzten Separators über eine Konzentratrückführungsleitung mit der Ansaugseite des Verdichters verbunden ist. Das Konzentrat des nachgeschalteten Separators, bei dem es sich um mit Stickstoff angereicherte Luft handelt, wird also rezirkuliert, woraus eine Wirkungsgradsteigerung resultiert. Während des Eichens der O₂-Sonde wird die Konzentratrückführungsleitung unterbrochen.

Die Luftrückführungsleitung, die Konzentratrückführungsleitung und die Meßgasrückführungsleitung münden vorteilhafterwelse in einem dem Luftverdichter vorgeschalteten Luftfilter.

Ferner ist es vorteilhaft, daß der Luftverdichter einen Motor mit Gebläse aufweist und daß das Gebläse gegenüber dem Luftkühler angeordnet ist. Das Gebläse kühlt also nicht nur den Motor, sondern versorgt auch den Luftkühler mit Kühlluft. Der apparatetechnische Aufwand wird also minimiert.

Als erfindungswesentlich offenbart gelten auch Kombinationen und Unterkomoinationen der erfindungsgemäßen Merkmale, die von den beiliegenden Ansprüchen abweichen.

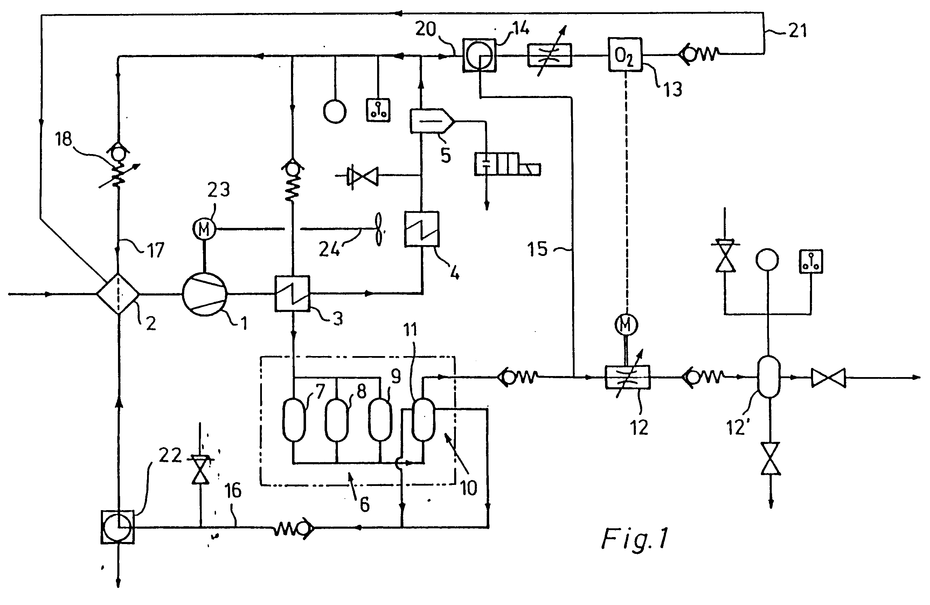

Die Erfindung wird im folgenden anhand eines bevorzugten Ausführungsbeispiels im Zusammenhang mit der beiliegenden Zeichnung näher erläutert. Die Zeichnung zeigt ein Fließbild einer erfindungsgemäßen Vorrichtung.

Demnach ist ein Luftverdichter 1 vorgesehen, dem ansaugseitig ein Luftfilter 2 vorgeschaltet ist. Die verdichtete und dementsprechend erwärmte Luft wird durch einen Wärmetauscher 3 hindurchgefördert, dessen Funktion weiter unten erläutert werden soll.

Aus dem Wärmetauscher 3 gelangt die immer noch heiße Luft zu einem Luftkühler 4, in dem sie unter den Taupunkt der kondensierbaren Verunreinigungen abgekühlt wird. Dementsprechend kann die Luft in einem nachgeschalteten Kondensatabscheider 5 gereinigt werden.

Die gereinigte Luft wird sodann durch den Wärmetauscher 3 geführt, in dem im Wärmeaustausch mit der aus dem Luftverdichter 1 kommenden heißen, ungereinigten Luft eine Wiedererwärmung auf diejenige Temperatur stattfindet, bei der die Separation des Stickstoffs durchgeführt wird. Die Wiedererwärmung der Luft erfolgt also unter Einsatz der ohnehin vom Verdichter zur Verfügung gestellten Wärme, und zwar mit hohem Wirkungsgrard und in apparativ sehr einfacher Weise.

Die wiedererwärmte Luft passiert anschließend eine erste Membran-Separatorstufe 6, die aus drei parallelgeschalteten Separatoren 7, 8 und 9 besteht. Daran schließt sich eine zweite Membran-Separatorstufe 10 an, bestehend aus einem einzigen Separator 11.

Das Permeat des Separators 11, nämlich der erzeugte Stickstoff, wird sodann über eine verstellbare Drossel 12 einem Speicherbehälter 12' zugeleitet.

Die verstellbare Drossel 12 dient dazu, den Reinheitsgrad des erzeugten Stickstoffs zu steuern. Hierzu arbeitet die Drossel 12 in Abhängigkeit von einer O₂-Sonde 13, die über ein Dreiwegeventil 14 an eine Steuerleitung 15 angeschlossen ist. Letztere mündet in der Leitung zwischen dem Separator 11 und der verstellbaren Drossel 12.

Das Permeat der ersten Separatorstufe 6, das die zweite Separatorstufe 10 speist, besteht aus mit Stickstoff angereicherter Luft. Auch das Konzentrat der zweiten Separatorstufe 10 wird von mit Stickstoff angereicherter Luft gebildet. Dieses Konzentrat wird über eine Konzentratrückführleitung 16 dem Luftfilter 2 zugeführt und damit in den Prozeß rezirkuliert. Hieraus resultiert eine beträchtliche Wirkungsgradsteigerung.

Die Leistung des Luftverdichters 1 ist an die Leistung der Separatoren angepaßt. Für den Fall einer Leistungsreduzierung kann eine Luftrückführleitung 17 vorgesehen sein, die zwischen dem Kondensatabscheider 5 und dem Wärmetauscher 3 abzweigt und zum Luftfilter 2 führt. Der Durchsatz durch die Luftrückführungsleitung 17 wird von einem Ventil 18 gesteuert, das in einstellbarer Abhängigkeit vom Auslaßdruck des Luftverdichters arbeitet.

Hinter dem Kondensatabscheider 5 zweigt eine Eichleitung 20 ab, die zu dem Dreiwegeventil 14 führt. Sobald die O₂-Sonde 13 geeicht werden soll, wird das Dreiwegeventil 14 umgeschaltet. Die O₂-Sonde steht dann nicht mehr mit der Steuerleitung 15 in Verbindung, sondern mit der Eichleitung 20, aus der sie gekühlte und gereinigte Luft erhält.

Im übrigen ist die O₂-Sonde 13 über eine Meßgasrückführungsleitung 21 an den Luftfilter 2 angeschlossen. Das Meßgas, sei es Stickstoff oder Eichgas, wird also in den Prozeß rezirkuliert.

Während der Eichung empfiehlt es sich, die Rückführung des Konzentrats der zweiten Separatorstufe 10 zum Luftfilter 2 zu unterbrechen. Hierzu ist die Konzentratrückführungsleitung 16 mit einem Absperrventil 22 in Form eines Dreiwegeventils versehen.

Der Luftverdichter 1 weist einen Motor 23 auf, der mit einem Gebläse 24 ausgerüstet ist. Letzteres ist gegenüber dem Luftkühler 4 angeordnet und versorgt diesen mit Kühlluft.

Insgesamt ergibt sich eine apparativ sehr einfache Vorrichtung, die mit hohem Wirkungsgrad Stickstoff von vorgewählter Reinheit erzeugt.

Im Rahmen der Erfindung sind durchaus Abwandlungsmöglichkeiten gegeben. So kann mit mehr als zwei Separatorstufen gearbeitet werden. Auch ist die Anzahl und die Parallel- bzw. Reihenschaltung der Separatoren in jeder Stufe an die betrieblichen Erfordernisse anpaßbar. Sofern der Wärmetauscher 3 die aus dem Luftverdichter 1 kommende heiße Luft ausreichend stark abkühlt, kann auf den nachgeschalteten Luftkühler 4 verzichtet werden. Andererseits können auch mehrere Luftkühler hintereinander geschaltet werden. Bei einer optimalen Leistungsanpassung zwischen Verdichter und Separatoren kann auf eine Leistungsregelung des Verdichters verzichtet werden. Im übrigen kommt für eine Leistungsregelung anstelle des Ventils 18 auch eine einstellbare Drossel in Frage, ggf. in Kombination mit einem Magnetventil.

## Patentansprüche

1. Verfahren zum Erzeugen von Stickstoff, bei dem Luft verdichtet, gekühlt, gereinigt, wieder erwärmt und schließlich durch mindestens eine Membran-Separatorstufe geleitet wird,
**dadurch gekennzeichnet,**
daß das Wiedererwärmen der gereinigten Luft im Wärmeaustausch mit der verdichteten, zu kühlenden Luft durchgeführt wird.

2. Verfahren nach Anspruch 1, dadurch gekennzeichnet, daß bei Reduzierung der Leistung mindestens ein Teil der gekühlten, gereinigten Luft zur Verdichtung rezirkuliert wird.

3. Verfahren nach Anspruch 1 oder 2, dadurch gekennzeichnet, daß bei Einsatz von mindestens zwei Separatorstufen das Konzentrat aus mindestens einer der nachgeschalteten Separatorstufen, vorzugsweise das Konzentrat der letzten Separatorstufe zur Verdichtung rezirkuliert wird.

4. Vorrichtung zum Erzeugen von Stickstoff, mit einem Luftverdichter (1), mindestens einem dem Luftverdichter nachgeschalteten Luftkühler (4), einem dem Luftkühler nachgeschalteten Kondensatabscheider (5), einer dem Kondensatabscheider nachgeschalteten Heizeinrichtung und mindestens einem der Heizeinrichtung nachgeschalteten Membran-Separator (7, 8, 9, 11), dadurch gekennzeichnet, daß die Heizeinrichtung als Wärmetauscher (3) ausgebildet und heißluftseitig zwischen den Luftverdichter (1) und den Luftkühler (4) geschaltet ist.

5. Vorrichtung nach Anspruch 4, gekennzeichnet durch eine stromab des Kondensatabscheiders (5) abzweigende, zur Ansaugseite des Luftverdichters (1) führende, ein Ventil (18) enthaltene Luftrückführungsleitung (17), wobei das Ventil (18) vorzugsweise in Abhängigkeit vom Auslaßdruck des Luftverdichters (1) arbeitet.

6. Vorrichtung nach Anspruch 4 oder 5, dadurch gekennzeichnet, daß dem Separator (7, 8, 9, 11) eine verstellbare, von einer O₂-Sonde (13) gesteuerte Drossel (12) nachgeschaltet ist und daß die O₂-Sonde zu Eichzwecken mit der im Kondensatabscheider (5) gereinigten Luft beaufschlagbar ist, wobei vorzugsweise die O₂-Sonde (13) eingangsseitig über ein Dreiwegeventil (14) an eine Eichleitung (20) angeschlossen ist, die stromab des Kondensatabscheiders (5) abzweigt.

7. Vorrichtung nach Anspruch 6, dadurch gekennzeichnet, daß die O₂-Sonde (13) ausgangsseitig über eine Meßgasrückführungsleitung (21) mit der Ansaugseite des Luftverdichters (1) verbunden ist.

8. Vorrichtung nach einem der Ansprüche 4 bis 7, dadurch gekennzeichnet, daß mindestens zwei Separatoren (7, 8, 9, 11) vorgesehen sind und daß der Konzentratauslaß mindestens eines der nachgeschalteten Separatoren, vorzugsweise der Konzentratauslaß des letzten Separators (11) über eine Konzentratrückführungsleitung (16) mit der Ansaugseite des Verdichters verbunden ist.

9. Vorrichtung nach einem der Ansprüche 5 bis 8, dadurch gekennzeichnet, daß die Luftrückführungsleitung (17), die Konzentratrückführungsleitung (16) und die Meßgasrückführungsleitung (21) in einem dem Luftverdichter (1) vorgeschalteten Luftfilter (2) münden.

10. Vorrichtung nach einem der Ansprüche 4 bis 9, dadurch gekennzeichnet, daß der Luftverdichter (1) einen Motor (23) mit einem Gebläse (24) aufweist und daß das Gebläse gegenüber dem Luftkühler (4) angeordnet ist.

## Claims

1. Method of producing nitrogen in which air is compressed, cooled, cleaned, reheated and is finally passed through at least one membrane separator stage characterised in that the reheating of the cleaned air is performed in heat exchange with the compressed air to be cooled.

2. Method as claimed in claim 1, characterised in that at least a portion of the cooled, cleaned air is recirculated to the compressor with a reduction in the output.

3. Method as claimed in claim 1 or 2, characterised in that when using at least two separator stages the concentrate from at least one of the downstream separator stages, preferably the concentrate from the last separator stage, is recirculated to the compressor.

4. Apparatus for producing nitrogen with an air compressor (1), at least one air cooler (4) connected downstream of the air compressor, a condensate separator (5) connected downstream of the air cooler, a heating device connected downstream of the condensate separator and at least one membrane separator (7,8,9,11) connected downstream of the heating device, characterised in that the heating device is constructed as a heat exchanger (3) and is connected on the hot air side between the air compressor (1) and the air cooler (4).

5. Apparatus as claimed in claim 4, characterised by an air feedback line (17), which includes a valve (18) and branches off downstream of the condensate separator (5) and leads to the inlet side of the air compressor (1), the valve (18) preferably operating in dependence on the outlet pressure of the air compressor (1).

6. Apparatus as claimed in claim 4 or 5, characterised in that connected downstream of the separator (7,8,9,11) there is an adjustable throttle (12) controlled by an O₂ sampling device (13) and that the O₂ sampling device may be acted on by the air cleaned in the condensate separator (5) for calibration purposes, the O₂ sampling device (13) preferably being connected on the inlet side via a three-way valve (14) to a calibration line (20) which branches off downstream of the condensate separator (5).

7. Apparatus as claimed in claim 6, characterised in that the O₂ sampling device (13) is connected on the outlet side via a measuring gas feedback line (21) to the suction side of the air compressor (1).

8. Apparatus as claimed in one of claims 4 to 7, characterised in that at least two separators (7,8,9,11) are provided and that the concentrate outlet of at least one of the downstream separators, preferably the concentrate outlet of the last separator (11), is connected via a concentrate feedback line (16) to the suction side of the compressor.

9. Apparatus as claimed in one of claims 5 to 8, characterised in that the air feedback line (17), the concentrate feedback line (16) and the measuring gas feedback line (21) communicate with an air filter (2) connected upstream of the air compressor (1).

10. Apparatus as claimed in one of claims 4 to 9, characterised in that the air compressor (1) has a motor (23) with a fan (24) and that the fan is arranged opposite to the air cooler (4).

## Revendications

1. Procédé de production d'azote, dans lequel on comprime de l'air, on le refroidit, on l'épure, on le chauffe de nouveau et on le fait enfin passer par au moins un étage séparateur à membrane,
caractérisé par le fait que,
le réchauffage de l'air épuré est effectué avec un échange de chaleur avec l'air à refroidir, ayant été comprimé.

2. Procédé selon la revendication 1, caractérisé par le fait que, en cas de réduction de la puissance, on fait recirculer à la compression au moins une partie de l'air épuré refroidi.

3. Procédé selon la revendication 1 ou 2, caractérisé par le fait que, en cas d'utilisation d'au moins deux étages séparateurs, le concentrat issu d'au moins l'un des étages séparateur branché en aval, de préférence le concentrat issu du dernier étage séparateur, est remis en recirculation à la compression.

4. Dispositif pour produire de l'azote, comprenant un compresseur d'air (1), au moins un réfrigérant d'air (4) branché en circuit en aval du compresseur d'air, un séparateur de condensat (5) branché en aval du réfrigérant d'air, un dispositif de chauffage branché en aval du séparateur de condensat, et au moins un séparateur à membrane (7, 8, 9, 11) branché en aval du dispositif de chauffage, caractérisé par le fait que le dispositif de chauffage est réalisé sous la forme d'un échangeur de chaleur (3) et est mis en circuit, côté air chaud, entre le compresseur d'air (1) et le réfrigérant d'air (4).

5. Dispositif selon la revendication 4, caractérisé par une conduite de recyclage d'air (17), issue d'une ramification faite en aval du séparateur de condensat (5), allant au côté aspiration du compresseur d'air (1), contenant une soupape (18), la soupape (18) fonctionnant de préférence en fonction de la pression d'échappement du compresseur d'air (1).

6. Dispositif selon la revendication 4 ou 5, caractérisé par le fait que, en aval du séparateur (7, 8, 9, 11), est mis en circuit un étranglement (12) réglable, commandé par une sonde O₂ (13) et que la sonde O₂ est susceptible d'être sollicitée à des fins d'étalonnage, avec l'air épuré se trouvant dans le séparateur de condensat (5), de préférence la sonde O₂ (13) étant raccordée côté entrée, par une soupape à trois voies (14), à une conduite d'étalonnage (20) qui se ramifie en aval du séparateur de condensat (5).

7. Dispositif selon la revendication 6, caractérisé par le fait que la sonde O₂ (13) est reliée côté sortie, par une conduite de recyclage de gaz de mesure (21), au côté aspiration du compresseur d'air (1).

8. Dispositif selon l'une des revendications 4 à 7, caractérisé par le fait qu'au moins deux séparateurs (7, 8, 9, 11) sont prévus, et que l'échappement de concentrat issu d'au moins l'un des séparateurs aval, de préférence l'échappement de concentrat issu du dernier séparateur (11), est relié au côté aspiration du compresseur par une conduite de recyclage de concentrat (16).

9. Dispositif selon l'une des revendications 5 à 8, caractérisé par le fait que la conduite de recyclage d'air (17), la conduite de recyclage de concentrat (16) et la conduite de recyclage de gaz de mesure (21) débouchent dans un filtre à air (2) mis en circuit en amont du compresseur d'air (1).

10. Dispositif selon l'une des revendications 4 à 9, caractérisé par le fait que le compresseur d'air (1) présente un moteur (23) équipé d'une soufflante (24), et que la soufflante est disposée face au réfrigérant d'air (4).
